# EUROPEAN PATENT SPECIFICATION

(11) **EP 2 222 130 B1**
(45) Date of publication and mention of the grant of the patent: **16.05.2012**
(21) Application number: 07855937.4
(22) Date of filing: 29.12.2007
(51) Int. Cl.: H04W 88/08

(54) **BASE BAND UNIT, RADIO FREQUENCY UNIT AND DISTRIBUTED BS SYSTEM BASED ON SRIO PROTOCOL**
BASISBANDEINHEIT, HOCHFREQUENZEINHEIT UND VERTEILTES BS-SYSTEM AUF DER BASIS DES SRIO-PROTOKOLLS
UNITÉ EN BANDE DE BASE, UNITÉ RADIO FRÉQUENCE ET SYSTÈME BS DISTRIBUÉ DE PROTOCOLE SRIO

(30) Priority: 21.11.2007 CN 200710188399
(43) Date of publication of application: 25.08.2010
(73) Proprietor: ZTE Corporation, Shenzhen, Guangdong 518057 (CN)
(72) Inventor: ZHAO, Zhiyong, Guangdong 518057 (CN)
(74) Representative: Pallini, Diego
(86) International application number: PCT/CN2007/003937
(87) International publication number: WO 2009/065268

(56) References cited:
- WO-A1-02/32183
- CN-A- 1 661 941
- CN-A- 1 805 566
- GB-A- 2 329 798
- KR-A- 20040 061 249

## Description

### Technical Field

The present invention relates to a distributed Base Station (BS) system in a wireless communication system, wherein a BBU (Base Band Unit) and a RU (Radio Unit) are separated from each other, and in particular, to a distributed BS system transmitting signals between the BBU and the RU using SRIO (Serial RapidIO) protocol, a BBU and a RU based on the SRIO protocol.

### Background of the Invention

In the recent years, a wireless communication system evolves gradually to a distributed BS system in architecture. The so-called distributed BS system is a system in which the BBU and the RU of a base station are separated from each other, and a BBU is connected with a plurality of RUs via fiber transmission, cable transmission and the like. The RU can be located together with the BBU or far away from the BBU. This kind of architecture can increase the flexibility of networking on one hand; and can decrease the cost for maintaining the network on the other hand. Therefore, this kind of architecture is increasingly accepted by users, and is applied in more and more situations. An example of such a distributed BS system is presented in GB 2 329 798 A, where the base band unit and many radio units are connected in a wired manner and able to exchange data among each other.

There is also more and more research on the interface standards between the BBU and the RU, for example, an OBSAI (Open Base Station Architecture Initiative) standard, a CPRI (Common Public Radio Interface) standard and so on. These interface standards all possess their own protocol structures. On the other hand, the SRIO technique is more and more applied in a base station. It is also currently applied in many distributed base stations due to high efficiency and good reliability, for example, a high-speed SRIO protocol is used between DSP and FPGA or CPU of a BBU. In this case, a base band has two protocols for transmitting signals: the SRIO protocol and base band radio interface protocol, and conversion between the two protocols must be implemented. Conversion between protocols will cause increase of delay and processing complexity, and also increase the cost of hardware.

### Summary of the Invention

The technical problem to be solved in the present invention is to provide a base band unit based on SRIO protocol and a radio unit corresponding to the base band unit, and a distributed BS system composed of such base band unit and radio unit to overcome the defect caused by conversion between two protocols required for the existing distributed BS system. In this system, the same SRIO protocol is used within the base band unit and at an interface between the base band unit and radio unit, therefore, it does not need conversion between different protocols, thus decreasing the complexity of the system.

In order to solve the above technical problem, the BBU based on SRIO protocol provided by the present invention is mainly composed of a base band processing module, a main control module, a base band SRIO (BSRIO) switching module and a base band interface processing module. The base band processing module is used for base band processing for radio signals; the main control module is used for managing and controlling the BBU and serves as a HOST of the BSRIO switching module; the base band interface processing module is used for converting data at an interface between the BBU and a higher-level network element. All of the base band processing module, main control module and the base band interface processing module are connected with the ports of the BSRIO switching module, and implement information exchange through the BSRIO switching module using SRIO protocol.

The BBU further comprises a clock module and a power module, which are used for providing clock and power for the BBU respectively.

The BBU may further comprise an environment monitoring module mainly for monitoring parameters such as temperature, humidity and the like of the environment. When the values of the parameters exceed set thresholds, an alarming signal will be sent to the main control module.

The RU based on SRIO protocol provided by the present invention is mainly composed of a SRIO interface module, a transceiver module and an antenna feeder module. The SRIO interface module is connected with the BSRIO switching module and the transceiver module for converting data between the transceiver module and the BSRIO switching module; the antenna feeder module is connected with the transceiver module for transmitting and receiving radio signals of the transceiver; the transceiver module is connected with the SRIO interface module and the antenna feeder module for conversion between base band data and radio signals.

The RU with the above structure applies to the case in which the RU is point-to-point connected with the BBU. If the RU is not point-to-point connected with the BBU, for example, one RU is connected with a plurality of ports of the BBU, or one RU is also cascaded with other RUs, then such a RU further comprises a radio SRIO (RSRIO) switching module. Correspondingly, the SRIO interface module is connected with the RSRIO switching module and the transceiver module for converting data between the transceiver module and the RSRIO switching module; the RSRIO switching module is used for converting data between the BSRIO switching module and the SRIO interface module of the RU or other RUs; the antenna feeder module is connected with the transceiver module for transmitting and receiving radio signals of the transceiver; the transceiver module is connected with the SRIO interface module and the antenna feeder module for conversion between base band data and radio signals.

The distributed BS system based on SRIO protocol provided by the present invention comprises the BBU and several RUs. The RU may be a first RU without a RSRIO switching module described above, or a second RU having the RSRIO switching module described above, or it can comprise both the first RU and the second RU. The SRIO interface module or the RSRIO switching module of the RU is connected with the BSRIO switching module of the BBU in a wired manner, for example, via cable, fiber connection or backboard connection, to constitute a SRIO switching network of the distributed BS system. The base band processing module, main control module, base band interface processing module within the BBU perform information exchange with the SRIO interface module of the RU via the SRIO switching network using SRIO protocol.

As the HOST of the BSRIO switching module, the main control module configures the destination address of each module connected with the BSRIO ports in the BS system according to the topology relationship between the BBU and the RU, i.e., distribute the destinations addresses of the base band processing module, main control module, base band interface processing module in the BBU and the destinations address of the RSRIO interface module; the main control module maintains the routing table of the SRIO network, and the routing table comprises the corresponding relationship between the SRIO ports and the destination addresses in the system.

The BBU and several RUs can form a plurality of topology structures, such as chain, star, tree, ring, Mash structure and so on.

In the distributed BS system based on SRIO of present invention, the port of the RSRIO switching module of the RU is connected with the port of the BSRIO switching module of the BBU via a medium such as a cable or a fiber, and the SRIO switching modules and SRIO interface modules within the entire BS system can be connected to form the SRIO switching network. All of the main modules in the BS system, including the base band interface processing module, base band processing module and main module as well as the RSRIO interface modules of the RU, are connected with the ports of the SRIO switching network, and meanwhile the SRIO interface module of the RU is connected with the transceiver module. Therefore, all the main modules in the distributed BS system according to the present invention can perform information exchange with each other via the SRIO switching network using SRIO protocol, i.e., the same protocol is used both within the BBU and between the BBU and the RU, therefore conversion between protocols is not needed, thus decreasing the processing complexity of the system and increasing operating efficiency of the system.

SRIO protocol is used between the BBU and the RUs in the present invention, and the BBU and RUs can conveniently form a plurality of topology structures, thus greatly improving networking capability of the distributed base station. During data transmission, the sender only needs to know the destination address of the data to be transmitted, and does not have to pay attention to the transmission path. Additionally, data of a plurality of wireless patterns can be transmitted between the BBU and the RU by using SRIO protocol, thus achieving a multi-mode distributed BS system.

### Brief Description of the Drawings

FIG. 1 is an illustration for the chain-shaped topology structure of BBU-RU of the present invention;
FIG. 2 is an illustration for the tree-shaped topology structure of BBU-RU of the present invention; and
FIG. 3 is an illustration for the Mash topology structure of BBU-RU of the present invention.

### Preferred Embodiments of the Invention

The BBU, RU and the distributed BS system according to the present invention will be further described with reference to the drawings and the specific examples.

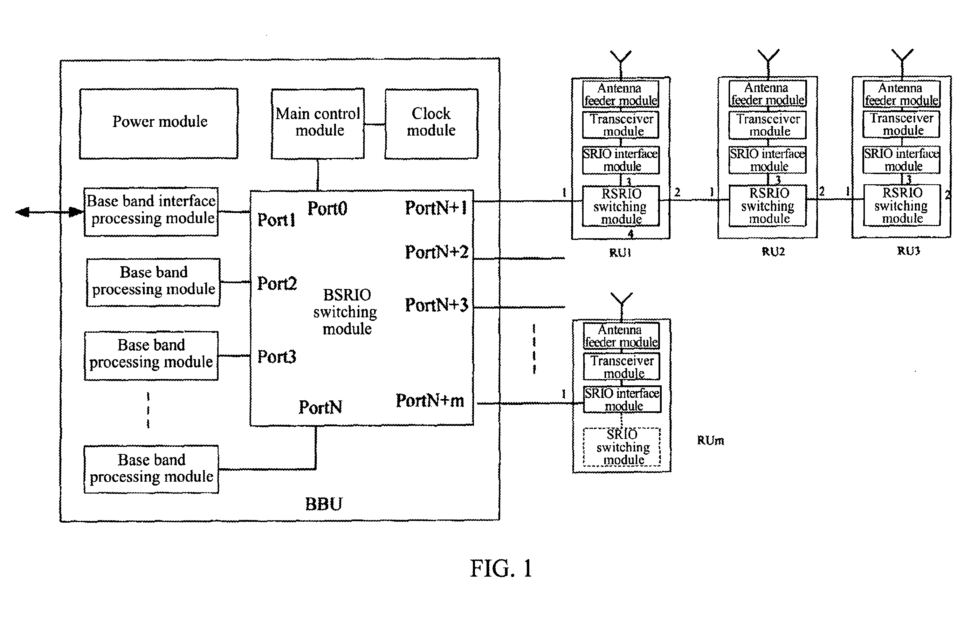

The left half part of FIG. 1 shows a structure of the BBU of the present invention. As shown in the figure, the BBU comprises a main control module, a base band SRIO (BSRIO) switching module, a base band interface processing module, a clock module, a power module and several base band processing modules. Wherein, the base band processing module is used for base band processing for radio signals comprising encoding, decoding, modulating, and demodulating etc.; the main control module is used for managing and controlling the BBU, and serves as a HOST of the BSRIO switching module; the base band interface processing module is used for converting data at an interface between the BBU and a higher-level network element; the clock module and power module are used for providing clock and power for the BBU respectively. In the BBU, the main control module is connected to the Port0 of the BSRIO switching module, the base band interface processing module is connected to the Port1 of the BSRIO switching module, and a plurality of base band processing modules are connected to Port2~PortN of the BSRIO switching module. PortN+1~PortN+m of the of the BSRIO switching module of the BBU are connected to the RUs. The BBU may further comprise an environment monitoring module mainly for monitoring parameters such as temperature, humidity and the like of the environment, and when the values of the parameters exceed set thresholds, an alarming signal will be sent to the main control module.

### Example 1 of the RU: a RU without radio SRIO (RSRIO) switching module

The radio unit RUm shown in FIG. 1 illustrates the structure of the first RU of the present invention. As shown in the figure, the first radio unit RUm comprises a SRIO interface module, a transceiver module and an antenna feeder module. The SRIO interface module is connected with the BSRIO switching module and the transceiver module for converting data between the transceiver module and the BSRIO switching module. For example, in the downstream direction, the SRIO interface module receives SRIO data packets of the BSRIO switching module, and extracts the payload data and transfers them to the transceiver module; in the upstream direction, the SRIO interface module packages the data sent by the transceiver module into SRIO data packets, which are then transmitted to the BBU through the BSRIO switching module; the antenna feeder module is connected with the transceiver module for transmitting and receiving radio signals of the transceiver; the transceiver module is connected with the SRIO interface module and the antenna feeder module for conversion between base band data and radio signals. The radio unit RUm is point-to-point connected with a port of the BBU only via the first port 1, and is not cascaded with other RUs.

### Example 2 of the RU: a RU having a radio SRIO (RSRIO) switching module

The radio units RU1, RU2, and RU3 shown in FIG. 1 illustrate the structure of the second RU of the present invention. As shown in the figure, the second RU further comprises a RSRIO switching module in addition to all the modules existing in the first RU. Correspondingly, the SRIO interface module is connected with the RSRIO switching module and the transceiver module for converting data between the transceiver module and the RSRIO switching module. For example, in the downstream direction, the SRIO interface module receives SRIO data packets of the RSRIO switching module, and extracts the payload data and transfers them to the transceiver module; in the upstream direction, the SRIO interface module packages the data sent by the transceiver module into SRIO data packets, which are then transmitted to the BBU through the RSRIO switching module; the RSRIO switching module is used for converting data between the BSRIO switching module and the SRIO interface module of the RU or other RUs; the antenna feeder module is connected with the transceiver module for transmitting and receiving radio signals of the transceiver; the transceiver module is connected with the SRIO interface module and the antenna feeder module for conversion between base band data and radio signals.

### Example 1 of the BS system: a distributed BS system in which the BBU and the RUs form a chain-shaped structure

The distributed BS system with a chain-shaped structure shown in FIG. 1, comprises a BBU and several RUs, wherein the structure of the BBU and the RUs is as described above.

When the RUs are point-to-point connected with the BBU, the SRIO interface modules in the RUs are directly connected with the BSRIO port of the BBU, see the radio unit RUm shown in the figure; when the RUs have topology relationship with the BBU, for example, a plurality of RUs form a chain-chaped connection as shown by RU1, RU2, and RU3 in FIG. 1, the topology is realized with the aid of the RSRIO switching module. As shown in the figure, the first port 1 of the RSRIO switching module in RU1 is connected with the PortN+1 of the BSRIO switching module, the second port 2 of the RSRIO switching module is connected with the first port 1 of the RSRIO switching module of a lower-level cascaded RU2, and the third port 3 of the RSRIO switching module is connected with the SRIO interface module in RU1; similarly, the second port 2 of the RSRIO switching module of RU2 is connected with the RSRIO port of the lower-level cascaded RU3, and the third port 3 of the RSRIO switching module is connected with the SRIO interface module in RU2; the first port 1 of the RSRIO switching module of RU3 is connected with RU2, and the third port 3 of the RSRIO switching module is connected with the SRIO interface module in RU3.

The BSRIO switching module of the BBU and the RSRIO switching modules and the SRIO interface modules of the RUs constitute a SRIO switching network of a distributed system through cable, fiber connection or backboard connection, and achieve a chain-shaped topology structure between a plurality of RUs and a BBU. Since all the main functional modules are connected with the SRIO switching network in the distributed base station, both the communication of data or signaling within the BBU and the communication of data or signaling between the BBU and the RUs are all achieved through the SRIO switching network.

The main control module of the BBU configures the destination address of each module connected with the ports of the BSRIO switching module in the BS system according to the topology relationship between the BBU and the RUs, i.e., distributes the destinations addresses of the base band processing module, main control module, base band interface processing module in the BBU and the destinations address of the RSRIO interface module, and meanwhile maintains the routing table of the SRIO network, and the routing table comprises the corresponding relationship between the SRIO ports and the destination addresses in the system.

Various modules in the distributed base station communicate with each other according to the routing information and address information configured by the main control module: the main control module configures the address information to the functional modules of the BBU and the SRIO interface module of the RU through the SRIO switching network; the functional modules of the BBU and the SRIO interface module of the RU transform the information to be transmitted into the form of SRIO data packets, and then transmit them to the SRIO switching module according to the address information configured by the main control module; the SRIO switching module transmits the data packets to destination addresses according to the routing table.

In the downstream direction, the base band interface processing module converts the signaling and service data delivered by BSC (Base Station Controller)/RNC (Radio Network Controller) into the format of SRIO data packets respectively, and then switches the signaling information to the main control module and the service data to the base band processing module through the SRIO switching network. The main control module processes the signaling, and the signaling information of the main control module and other functional modules as well as the RUs also interacts through the SRIO network. The base band processing module performs protocol processing on the service data, then converts them into format of SRIO data packets, and switches to the SRIO interface modules of the RUs through the SRIO switching network. The SRIO interface modules of the RUs transmit the service data to the transceiver modules, and the transceiver modules process the data and transmit them out through the antenna feeder module.

In the upstream direction, the transceiver modules of the RUs receive the upstream data from the radio port, and then transmit them to the SRIO interface modules in the RUs after protocol processing; the SRIO interface modules convert the upstream data into the format of SRIO packets, and switch to the base band processing modules through the SRIO switching network; after processing, the base band processing modules switch the upstream service data to the base band interface processing module through the SRIO switching network; after format conversion, the base band interface processing module transmits the upstream service data to BSC/RNC. The signaling information of the RUs is switched to the main control module through the SRIO switching network, and the main control module processes the signaling, and the main control module switches the upstream signaling information to the base band interface processing module through the SRIO switching network and the base band interface processing module sends it to BSC/RNC.

Since a SRIO network is very flexible and can support a plurality of network topology relationships, the RUs and BBU of the present invention can also form many structures such as tree, ring, star and Mash, etc. Distributed BS systems with other structures according to the present invention will be described below with reference to another two examples.

### Example 2 of the BS system: a distributed BS system in which the BBU and the RUs form a tree-shaped structure

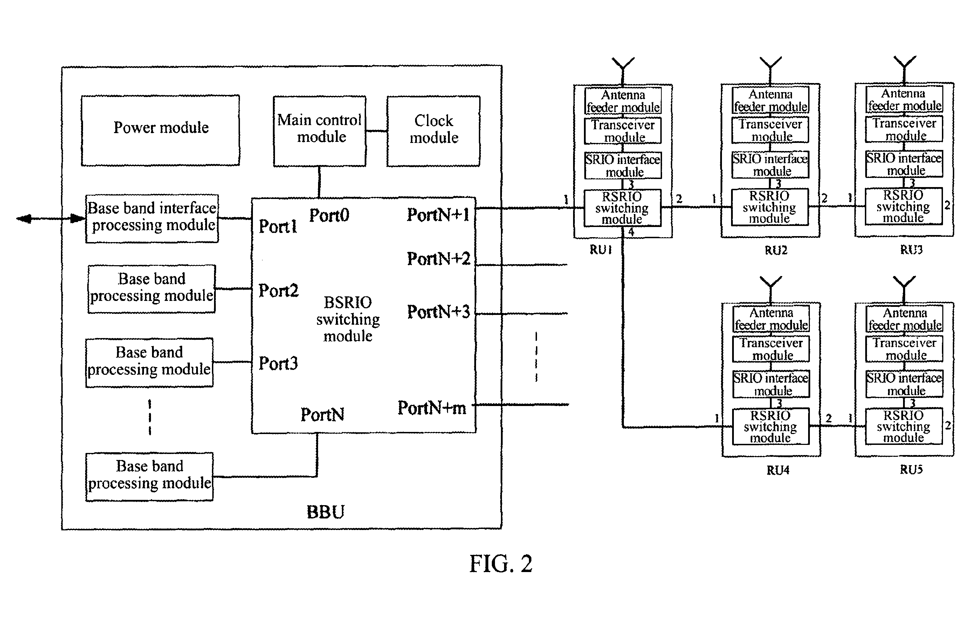

The distributed BS system with a tree-shaped structure is shown in FIG. 2, wherein the BBU and RU1, RU2, RU3 form a tree-shaped topology structure. In RU1, the fourth port 4 of the RSRIO switching module is connected with the first port 1 of the RSRIO switching module of RU4, the second port 2 of the RSRIO switching module of RU4 is connected with the first port 1 of the RSRIO switching module of RU5, thus forming a tree-shaped topology structure. The BSRIO switching module, RSRIO switching modules and SRIO interface modules in the system forms a SRIO switching network, through which each main module in the BBU implements data exchange with the transceiver module of the RU, thus enabling the distributed BS system to operate normally.

### Example 3 of the BS system: a distributed BS system in which the BBU and the RUs form a Mash structure

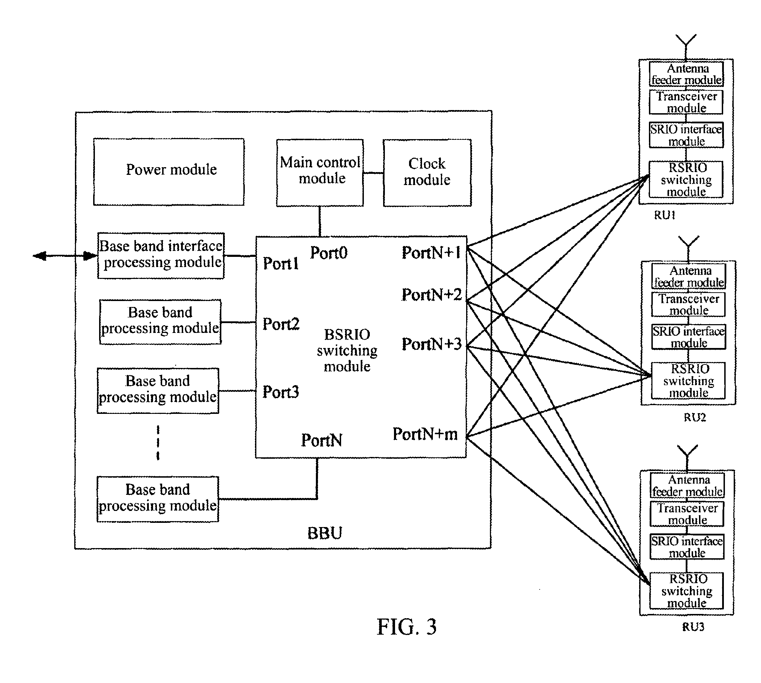

The distributed BS system with a Mash structure is shown in FIG. 3, wherein the BBU and RU1, RU2, RU3 form a Mash topology structure. The m ports of PortN+1~PortN+m of the BBU are all connected to the port of the RSRIO switching module of RU1, meanwhile they are connected to the port of the RSRIO switching module of RU2 and the port of the RSRIO switching module of RU3, thus forming a Mash topology structure. The BSRIO switching module, RSRIO switching modules and SRIO interface modules in the system forms a SRIO switching network, through which each main module in the BBU implements data exchange with the transceiver module of the RU, thus enabling the distributed BS system to operate normally.

Obviously, the present invention is not limited to the above examples and can be modified and varied according to practical requirements without departing from the scope and essence of the present invention.

### Industrial Applicability

SRIO protocol is used between the BBU and the RU in the present invention, and the BBU and RUs can conveniently form a plurality of topology structures, thus greatly improving networking capability of the distributed base station. During data transmission, the sender only needs to know the destination address of the data to be transmitted, and does not have to pay attention to the transmission path. Additionally, data of a plurality of wireless patterns can be transmitted between the BBU and the RUs by using SRIO protocol, thus achieving a multi-mode distributed BS system.

## Claims

1. A base band unit based on Serial RapidIO "SRIO" protocol comprising a base band processing module, a main control module, a base band SRIO switching module and a base band interface processing module, wherein
the base band processing module is adapted for base band processing for radio signals; the main control module is adapted for managing and controlling the base band unit and serves as a HOST of the base band SRIO switching module; the base band interface processing module is adapted for converting data between the base band unit and a higher-level network element; all of the base band processing module, the main control module and the base band interface processing module are connected with ports of the base band SRIO switching module, and adapted to implement information exchange through the base band SRIO switching module using SRIO protocol.

2. A radio unit based on Serial RapidIO "SRIO" protocol comprising a SRIO interface module, a transceiver module and an antenna feeder module, wherein,
the SRIO interface module is connected with a base band SRIO switching module and the transceiver module and adapted for converting data between the transceiver module and the base band SRIO switching module; the antenna feeder module is connected with the transceiver module and adapted for transmitting and receiving radio signals of a transceiver; the transceiver module is connected with the SRIO interface module and the antenna feeder module and adapted for conversion between base band data and radio signals.

3. The radio unit according to claim 2, further comprising a radio SRIO switching module adapted for converting data between the base band SRIO switching module and the SRIO interface module of the radio unit or other radio units; and the SRIO interface module is connected with the radio SRIO switching module and the transceiver module and adapted for converting data between the transceiver module and the radio SRIO switching module.

4. A distributed base station system based on Serial RapidIO "SRIO" protocol comprising a base band unit and several radio units, wherein:
the base band unit comprises a base band processing module, a main control module, a base band SRIO switching module and a base band interface processing module; the base band processing module is adapted for base band processing for radio signals; the main control module is adapted for managing and controlling the base band unit and serves as a HOST of the base band SRIO switching module; the base band interface processing module is adapted for converting data at an interface between the base band unit and a higher-level network element; all of the base band processing module, the main control module and the base band interface processing module are connected with ports of the base band SRIO switching module, and adapted to implement information exchange through the base band SRIO switching module using SRIO protocol;
the radio unit is a first radio unit comprising a SRIO interface module, a transceiver module and an antenna feeder module; the SRIO interface module is connected with the base band SRIO switching module and the transceiver module and adapted for converting data between the transceiver module and the base band SRIO switching module; the antenna feeder module is connected with the transceiver module adapted for transmitting and receiving radio signals of a transceiver; the transceiver module is connected with the SRIO interface module and the antenna feeder module and adapted for conversion between base band data and wireless signals;
the SRIO interface module of the first radio unit is point-to-point connected with the base band SRIO switching module of the base band unit in a wired manner to constitute a SRIO switching network of the distributed base station system; the base band processing module, the main control module, the base band interface processing module within the base band unit are adapted to perform information exchange with the SRIO interface module of the first radio unit via a SRIO switching network using SRIO protocol.

5. The distributed base station system according to claim 4, further comprising a second radio unit comprising a SRIO interface module, a radio SRIO switching module, a transceiver module and an antenna feeder module; the SRIO interface module is connected with the radio SRIO switching module and the transceiver module adapted for converting data between the transceiver module and the radio SRIO switching module; the radio SRIO switching module is adapted for converting data between the base band SRIO switching module and the SRIO interface module of the radio unit or other radio units; the antenna feeder module is connected with the transceiver module adapted for transmitting and receiving radio signals of the transceiver; the transceiver module is connected with the SRIO interface module and the antenna feeder module and adapted for conversion between base band data and radio signals;
the radio SRIO switching module of the second radio unit is connected with the base band SRIO switching module of the base band unit or radio SRIO switching modules of other second radio units in a wired manner to constitute a SRIO switching network of the distributed base station system; the base band processing module, the main control module, the base band interface processing module within the base band unit are adapted to perform information exchange with the SRIO interface module of the second radio unit via a SRIO switching network using SRIO protocol.

6. The distributed base station system according to claim 5, wherein the SRIO interface module of the first radio unit and the radio SRIO switching module of the second radio unit are connected with the base band SRIO switching module of the base band unit via cable, fiber connection or backboard connection.

7. The distributed base station system according to claim 5, wherein the main control module configures destination address of each module connected with ports of the base band SRIO in the base station system according to topology relationship between the base band unit and the radio unit, and maintains a routing table of the SRIO network, the routing table comprising corresponding relationship between SRIO ports and the destination addresses in the system.

8. The distributed base station system according to claim 7, wherein various modules in the distributed base station system communicate with each other according to routing information and address information configured by the main control module, functional modules of the base band unit and the SRIO interface module of the radio unit are adapted to transform information to be transmitted into a form of SRIO data packets, which are then transmitted to the SRIO switching module according to the address information configured by the main control module; the SRIO switching module is adapted to transmit the data packets to destination addresses according to the routing table.

9. The distributed base station system according to any of claims 4-8, wherein the topology relationship between the base band unit and the radio unit is of chain structure, tree structure, Mash structure, star structure or ring structure.

10. A distributed base station system based on Serial RapidIO "SRIO" protocol comprising a base band unit and several radio units, wherein:
the base band unit comprises a base band processing module, a main control module, a base band SRIO switching module and a base band interface processing module; the base band processing module is adapted for base band processing for radio signals; the main control module is adapted for managing and controlling the base band unit and serves as a HOST of the base band SRIO switching module; the base band interface processing module is adapted for converting data at an interface between the base band unit and a higher-level network element; all of the base band processing module, the main control module and the base band interface processing module are connected with ports of the base band SRIO switching module, and adapted to implement information exchange through the base band SRIO switching module using SRIO protocol;
the radio unit is a second radio unit comprising a SRIO interface module, a radio SRIO switching module, a transceiver module and an antenna feeder module; the SRIO interface module is connected with the radio SRIO switching module and the transceiver module adapted for converting data between the transceiver module and the radio SRIO switching module; the radio SRIO switching module is adapted for converting data between the base band SRIO switching module and the SRIO interface module of the radio unit or other radio units; the antenna feeder module is connected with the transceiver module and adapted for transmitting and receiving radio signals of the transceiver; the transceiver module is connected with the SRIO interface module and the antenna feeder module and adapted for conversion between base band data and radio signals;
the radio SRIO switching module of the second radio unit is connected with the base band SRIO switching module of the base band unit or radio SRIO switching modules of other second radio units in a wired manner to constitute a SRIO switching network of the distributed base station system; the base band processing module, the main control module, the base band interface processing module within the base band unit are adapted to perform information exchange with the SRIO interface module of the second radio unit via a SRIO switching network using SRIO protocol.

## Patentansprüche

1. Basisbandeinheit beruhend auf einem Serial RapidIO-Protokoll "SRIO-Protokoll", umfassend ein Basisbandverarbeitungsmodul, ein Hauptsteuermodul, ein Basisband-SRIO-Schaltmodul und ein Basisbandschnittstellenverarbeitungsmodul, wobei
das Basisbandverarbeitungsmodul zur Basisbandverarbeitung für Funksignale ausgelegt ist; das Hauptsteuermodul zur Verwaltung und Steuerung der Basisbandeinheit ausgelegt ist und als ein Host des Basisband-SRIO-Schaltmoduls dient; das Basisbandschnittstellenverarbeitungsmodul zum Umsetzen von Daten zwischen der Basisbandeinheit und einem Element eines Netzwerks auf höherer Ebene ausgelegt ist; sowohl das Basisbandverarbeitungsmodul als auch das Hauptsteuermodul als auch das Basisbandschnittstellenverarbeitungsmodul mit Anschlüssen des Basisband-SRIO-Schaltmoduls verbunden sind und ausgelegt sind, um einen Informationsaustausch unter Verwendung des SRIO-Protokolls durch das Basisband-SRIO-Schaltmodul zu implementieren.

2. Funkeinheit beruhend auf einem Serial RapidIO-Protokoll "SRIO-Protokoll", umfassend ein SRIO-Schnittstellenmodul, ein Sender/ Empfänger-Modul und ein Antennenzuleitungsmodul, wobei
das SRIO-Schnittstellenmodul mit einem Basisband-SRIO-Schaltmodul und dem Sender/Empfänger-Modul verbunden ist und ausgelegt ist, um Daten zwischen dem Sender/Empfänger-Modul und dem Basisband-SRIO-Schaltmodul umzusetzen; das Antennenzuleitungsmodul mit dem Sender/ Empfänger-Modul verbunden ist und ausgelegt ist, um Funksignale von einem Sender/ Empfänger zu übertragen und zu empfangen; das Sender/ Empfänger-Modul mit dem SRIO-Schnittstellenmodul und dem Antennenzuleitungsmodul verbunden ist und zur Umsetzung zwischen Basisbanddaten und Funksignalen ausgelegt ist.

3. Funkeinheit nach Anspruch 2,
ferner umfassend ein Funk-SRIO-Schaltmodul, das ausgelegt ist, um Daten zwischen dem Basisband-SRIO-Schaltmodul und dem SRIO-Schnittstellenmodul der Funkeinheit oder anderer Funkeinheiten umzusetzen; und wobei das SRIO-Schnittstellenmodul mit dem Funk-SRIO-Schaltmodul und dem Sender/Empfänger-Modul verbunden ist und ausgelegt ist, um Daten zwischen dem Sender/Empfänger-Modul und dem Funk-SRIO-Schaltmodul umzusetzen.

4. System mit verteilten Basisstationen beruhend auf einem Serial RapidIO-Protokoll "SRIO-Protokoll", umfassend eine Basisbandeinheit und mehrere Funkeinheiten, wobei:
die Basisbandeinheit ein Basisbandverarbeitungsmodul, ein Hauptsteuermodul, ein Basisband-SRIO-Schaltmodul und ein Basisbandschnittstellenverarbeitungsmodul umfasst; das Basisbandverarbeitungsmodul zur Basisbandverarbeitung für Funksignale ausgelegt ist; das Hauptsteuermodul zur Verwaltung und Steuerung der Basisbandeinheit ausgelegt ist und als ein Host des Basisband-SRIO-Schaltmoduls dient; das Basisbandschnittstellenverarbeitungsmodul zum Umsetzen von Daten an einer Schnittstelle zwischen der Basisbandeinheit und einem Element eines Netzwerks auf höherer Ebene ausgelegt ist; sowohl das Basisbandverarbeitungsmodul als auch das Hauptsteuermodul als auch das Basisbandschnittstellenverarbeitungsmodul mit Anschlüssen des Basisband-SRIO-Schaltmoduls verbunden sind und ausgelegt sind, um einen Informationsaustausch unter Verwendung des SRIO-Protokolls durch das Basisband-SRIO-Schaltmodul zu implementieren;
die Funkeinheit eine erste Funkeinheit ist, die ein SRIO-Schnittstellenmodul, ein Sender/Empfänger-Modul und ein Antennenzuleitungsmodul umfasst; das SRIO-Schnittstellenmodul mit dem Basisband-SRIO-Schaltmodul und dem Sender/Empfänger-Modul verbunden ist und ausgelegt ist, um Daten zwischen dem Sender/ Empfänger-Modul und dem Basisband-SRIO-Schaltmodul umzusetzen; das Antennenzuleitungsmodul mit dem Sender/ Empfänger-Modul verbunden ist und ausgelegt ist, um Funksignale von einem Sender/ Empfänger zu übertragen und zu empfangen; das Sender/ Empfänger-Modul mit dem SRIO-Schnittstellenmodul und dem Antennenzuleitungsmodul verbunden ist und zur Umsetzung zwischen Basisbanddaten und drahtlosen Signalen ausgelegt ist;
das SRIO-Schnittstellenmodul der ersten Funkeinheit auf eine drahtgebundene Weise in einer Punkt-zu-Punkt-Verbindung mit dem Basisband-SRIO-Schaltmodul der Basisbandeinheit steht, um ein SRIO-Schaltnetzwerk des Systems mit verteilten Basisstationen zu bilden; das Basisbandverarbeitungsmodul, das Hauptsteuermodul, das Basisbandschnittstellenverarbeitungsmodul innerhalb der Basisbandeinheit ausgelegt sind, um einen Informationsaustausch mit dem SRIO-Schnittstellenmodul der ersten Funkeinheit unter Verwendung des SRIO-Protokolls über ein SRIO-Schaltnetzwerk durchzuführen.

5. System mit verteilten Basisstationen nach Anspruch 4, ferner umfassend eine zweite Funkeinheit, die ein SRIO-Schnittstellenmodul, ein Funk-SRIO-Schaltmodul, ein Sender/ Empfänger-Modul und ein Antennenzuleitungsmodul umfasst; wobei das SRIO-Schnittstellenmodul mit dem Funk-SRIO-Schaltmodul und dem Sender/Empfänger-Modul verbunden ist und ausgelegt ist, um Daten zwischen dem Sender/Empfänger-Modul und dem Funk-SRIO-Schaltmodul umzusetzen; das Funk-SRIO-Schaltmodul ausgelegt ist, um Daten zwischen dem Basisband-SRIO-Schaltmodul und dem SRIO-Schnittstellenmodul der Funkeinheit oder anderer Funkeinheiten umzusetzen; das Antennenzuleitungsmodul mit dem Sender/ Empfänger-Modul verbunden ist und zum Übertragen und Empfangen von Funksignalen des Senders/Empfängers ausgelegt ist; das Sender/ Empfänger-Modul mit dem SRIO-Schnittstellenmodul und dem Antennenzuleitungsmodul verbunden ist und zur Umsetzung zwischen Basisbanddaten und Funksignalen ausgelegt ist;
wobei das Funk-SRIO-Schaltmodul der zweiten Funkeinheit mit dem Basisband-SRIO-Schaltmodul der Basisbandeinheit oder Funk-SRIO-Schaltmodulen von anderen zweiten Funkeinheiten auf eine drahtgebundene Weise verbunden ist, um ein SRIO-Schaltnetzwerk des Systems mit verteilten Basisstationen zu bilden; das Basisbandverarbeitungsmodul, das Hauptsteuermodul, das Basisbandschnittstellenverarbeitungsmodul innerhalb der Basisbandeinheit ausgelegt sind, um einen Informationsaustausch mit dem SRIO-Schnittstellenmodul der zweiten Funkeinheit unter Verwendung des SRIO-Protokolls über ein SRIO-Schaltnetzwerk durchzuführen.

6. System mit verteilten Basisstationen nach Anspruch 5, wobei das SRIO-Schnittstellenmodul der ersten Funkeinheit und das Funk-SRIO-Schaltmodul der zweiten Funkeinheit mit dem Basisband-SRIO-Schaltmodul der Basisbandeinheit über ein Kabel, eine Glasfaserverbindung oder eine Rückwandbusverbindung verbunden sind.

7. System mit verteilten Basisstationen nach Anspruch 5, wobei das Hauptsteuermodul eine Zieladresse jedes Moduls, das mit Anschlüssen des Basisband-SRIO im Basisstationssystem verbunden ist, gemäß einer Topologiebeziehung zwischen der Basisbandeinheit und der Funkeinheit konfiguriert und eine Routingtabelle des SRIO-Netzwerks mitführt, wobei die Routingtabelle eine entsprechende Beziehung zwischen SRIO-Anschlüssen und den Zieladressen im System umfasst.

8. System mit verteilten Basisstationen nach Anspruch 7, wobei verschiedene Module in dem System mit verteilten Basisstationen in Übereinstimmung mit Routinginformationen und Adressinformationen miteinander kommunizieren, die vom Hauptsteuermodul konfiguriert sind, Funktionsmodule der Basisbandeinheit und das SRIO-Schnittstellenmodul der Funkeinheit ausgelegt sind, um zu übertragende Informationen in eine Form von SRIO-Datenpakten umzuformen, welche dann in Übereinstimmung mit den Adressinformationen, die vom Hauptsteuermodul konfiguriert wurden, an das SRIO-Schaltmodul übertragen werden; das SRIO-Schaltmodul ausgelegt ist, um die Datenpakete in Übereinstimmung mit der Routingtabelle an Zieladressen zu übertragen.

9. System mit verteilten Basisstationen nach Anspruch 4 - 8, wobei die Topologiebeziehung zwischen der Basisbandeinheit und der Funkeinheit eine Kettenstruktur, eine Baumstruktur, eine Maschenstruktur, eine Sternstruktur oder eine Ringstruktur ist.

10. System mit verteilten Basisstationen beruhend auf einem Serial RapidIO-Protokoll "SRIO-Protokoll", umfassend eine Basisbandeinheit und mehrere Funkeinheiten, wobei:
die Basisbandeinheit ein Basisbandverarbeitungsmodul, ein Hauptsteuermodul, ein Basisband-SRIO-Schaltmodul und eine Basisbandschnittstellenverarbeitungsmodul umfasst; das Basisbandverarbeitungsmodul zur Basisbandverarbeitung für Funksignale ausgelegt ist; das Hauptsteuermodul zur Verwaltung und Steuerung der Basisbandeinheit ausgelegt ist und als ein Host des Basisband-SRIO-Schaltmoduls dient; das Basisbandschnittstellenverarbeitungsmodul zum Umsetzen von Daten an einer Schnittstelle zwischen der Basisbandeinheit und einem Element eines Netzwerks auf höherer Ebene ausgelegt ist; sowohl das Basisbandverarbeitungsmodul als auch das Hauptsteuermodul als auch das Basisbandschnittstellenverarbeitungsmodul mit Anschlüssen des Basisband-SRIO-Schaltmoduls verbunden sind und ausgelegt sind, um einen Informationsaustausch unter Verwendung des SRIO-Protokolls durch das Basisband-SRIO-Schaltmodul zu implementieren;
wobei die Funkeinheit eine zweite Funkeinheit ist, die ein SRIO-Schnittstellenmodul, ein Funk-SRIO-Schaltmodul, ein Sender/ Empfänger-Modul und ein Antennenzuleitungsmodul umfasst; das SRIO-Schnittstellenmodul mit dem Funk-SRIO-Schaltmodul und dem Sender/Empfänger-Modul verbunden ist und ausgelegt ist, um Daten zwischen dem Sender/Empfänger-Modul und dem Funk-SRIO-Schaltmodul umzusetzen; das Funk-SRIO-Schaltmodul zum Umsetzen von Daten zwischen dem Basisband-SRIO-Schaltmodul und dem SRIO-Schnittstellenmodul der Funkeinheit oder anderer Funkeinheiten ausgelegt ist; wobei das Antennenzuleitungsmodul mit dem Sender/Empfänger-Modul verbunden ist und ausgelegt ist, um Funksignale des Senders/Empfängers zu übertragen und zu empfangen; wobei das Sender/ Empfänger-Modul mit dem SRIO-Schnittstellenmodul und dem Antennenzuleitungsmodul verbunden ist und zur Umsetzung zwischen Basisbanddaten und Funksignalen ausgelegt ist;
wobei das Funk-SRIO-Schaltmodul der zweiten Funkeinheit mit dem Basisband-SRIO-Schaltmodul der Basisbandeinheit oder Funk-SRIO-Schaltmodulen von anderen zweiten Funkeinheiten auf eine drahtgebundene Weise verbunden ist, um ein SRIO-Schaltnetzwerk des Systems mit verteilten Basisstationen zu bilden; wobei das Basisbandverarbeitungsmodul, das Hauptsteuermodul und das Basisbandschnittstellenverarbeitungsmodul innerhalb der Basisbandeinheit ausgelegt sind, um einen Informationsaustausch mit dem SRIO-Schnittstellenmodul der zweiten Funkeinheit unter Verwendung des SRIO-Protokolls über ein SRIO-Schaltnetzwerk durchzuführen.

## Revendications

1. Unité en bande de base basée sur un protocole Serial RapidIO « SRIO » comprenant un module de traitement en bande de base, un module principal de commande, un module de commutation SRIO en bande de base et un module de traitement d'interface en bande de base, dans laquelle
le module de traitement en bande de base est adapté pour le traitement en bande de base de signaux radio ; le module principal de commande est adapté pour gérer et commander l'unité en bande de base et sert d'HOTE du module de commutation SRIO en bande de base ; le module de traitement d'interface en bande de base est adapté pour convertir des données entre l'unité en bande de base et un élément de réseau de niveau supérieur ; le module de traitement en bande de base, le module principal de commande et le module de traitement d'interface en bande de base sont tous connectés à des ports du module de commutation SRIO en bande de base, et adaptés pour mettre en oeuvre un échange d'informations par l'intermédiaire du module de commutation SRIO en bande de base en utilisant le protocole SRIO.

2. Unité radio basée sur un protocole Serial RapidIO « SRIO » comprenant un module d'interface SRIO, un module d'émetteur-récepteur et un module d'alimentation d'antenne, dans laquelle,
le module d'interface SRIO est connecté à un module de commutation SRIO en bande de base et au module d'émetteur-récepteur et adapté pour convertir des données entre le module d'émetteur-récepteur et le module de commutation SRIO en bande de base ; le module d'alimentation d'antenne est connecté au module d'émetteur-récepteur et adapté pour émettre et recevoir des signaux radio d'un émetteur-récepteur ; le module d'émetteur-récepteur est connecté au module d'interface SRIO et au module d'alimentation d'antenne et adapté pour la conversion entre des données en bande de base et des signaux radio.

3. Unité radio selon la revendication 2, comprenant en outre un module de commutation SRIO radio adapté pour convertir des données entre le module de commutation SRIO en bande de base et le module d'interface SRIO de l'unité radio ou d'autres unités radio ; et le module d'interface SRIO est connecté au module de commutation SRIO radio et au module d'émetteur-récepteur pour convertir des données entre le module d'émetteur-récepteur et le module de commutation SRIO radio.

4. Système de station de base réparti basé sur un protocole Serial RapidIO « SRIO » comprenant une unité en bande de base et plusieurs unités radio, dans lequel :
l'unité en bande de base comprend un module de traitement en bande de base, un module principal de commande, un module de commutation SRIO en bande de base et un module de traitement d'interface en bande de base ; le module de traitement en bande de base est adapté pour le traitement en bande de base de signaux radio ; le module principal de commande est adapté pour gérer et commander l'unité en bande de base et sert d'HOTE du module de commutation SRIO en bande de base ; le module de traitement d'interface en bande de base est adapté pour convertir des données au niveau d'une interface entre l'unité en bande de base et un élément de réseau de niveau supérieur ; le module de traitement en bande de base, le module principal de commande et le module de traitement d'interface en bande de base sont tous connectés à des ports du module de commutation SRIO en bande de base, et adaptés pour mettre en ouvre un échange d'informations par l'intermédiaire du module de commutation SRIO en bande de base en utilisant le protocole SRIO ;
l'unité radio est une première unité radio comprenant un module d'interface SRIO, un module d'émetteur-récepteur et un module d'alimentation d'antenne ; le module d'interface SRIO est connecté au module de commutation SRIO en bande de base et au module d'émetteur-récepteur et adapté pour convertir des données entre le module d'émetteur-récepteur et le module de commutation SRIO en bande de base ; le module d'alimentation d'antenne est connecté au module d'émetteur-récepteur adapté pour émettre et recevoir des signaux radio d'un émetteur-récepteur ; le module d'émetteur-récepteur est connecté au module d'interface SRIO et au module d'alimentation d'antenne et adapté pour la conversion entre des données en bande de base et des signaux sans fil ;
le module d'interface SRIO de la première unité radio est connecté point à point au module de commutation SRIO en bande de base de l'unité en bande de base de manière filaire afin de constituer un réseau de commutation SRIO du système de station de base réparti ; le module de traitement en bande de base, le module principal de commande, le module de traitement d'interface en bande de base à l'intérieur de l'unité en bande de base sont adaptés pour effectuer un échange d'informations avec le module d'interface SRIO de la première unité radio via un réseau de commutation SRIO en utilisant le protocole SRIO.

5. Système de station de base réparti selon la revendication 4, comprenant en outre une seconde unité radio comprenant un module d'interface SRIO, un module de commutation SRIO radio, un module d'émetteur-récepteur et un module d'alimentation d'antenne ; le module d'interface SRIO est connecté au module de commutation SRIO radio et au module d'émetteur-récepteur adapté pour convertir des données entre le module d'émetteur-récepteur et le module de commutation SRIO radio ;
le module de commutation SRIO radio est adapté pour convertir des données entre le module de commutation SRIO en bande de base et le module d'interface SRIO de l'unité radio ou d'autres unités radio ; le module d'alimentation d'antenne est connecté au module d'émetteur-récepteur adapté pour émettre et recevoir des signaux radio de l'émetteur-récepteur ; le module d'émetteur-récepteur est connecté au module d'interface SRIO et au module d'alimentation d'antenne et adapté pour la conversion entre des données en bande de base et des signaux radio ;
le module de commutation SRIO radio de la seconde unité radio est connecté au module de commutation SRIO en bande de base de l'unité en bande de base ou à d'autres modules de commutation SRIO radio d'autres secondes unités radio de manière filaire afin de constituer un réseau de commutation SRIO du système de station de base réparti ; le module de traitement en bande de base, le module principal de commande, le module de traitement d'interface en bande de base à l'intérieur de l'unité en bande de base sont adaptés pour effectuer un échange d'informations avec le module d'interface SRIO de la seconde unité radio via un réseau de commutation SRIO en utilisant le protocole SRIO.

6. Système de station de base réparti selon la revendication 5, dans lequel le module d'interface SRIO de la première unité radio et le module de commutation SRIO radio de la seconde unité radio sont connectés au module de commutation SRIO en bande de base de l'unité en bande de base via une connexion de câble, une connexion de fibres optiques ou une connexion de panneau.

7. Système de station de base réparti selon la revendication 5, dans lequel le module principal de commande configure des adresses de destination de chaque module connecté à des ports du SRIO en bande de base dans le système de station de base selon une relation topologique entre l'unité en bande de base et l'unité radio, et maintient une table de routage du réseau SRIO, la table de routage comprenant la relation correspondante entre des ports SRIO et les adresses de destination dans le système.

8. Système de station de base réparti selon la revendication 7, dans lequel divers modules dans le système de station de base réparti communiquent les uns avec les autres selon des informations de routage et des informations d'adresse configurées par le module principal de commande, des modules fonctionnels de l'unité en bande de base et le module d'interface SRIO de l'unité radio sont adaptés pour transformer des informations à transmettre en une forme de paquets de données SRIO, qui sont ensuite transmis au module de commutation SRIO selon les informations d'adresse configurées par le module principal de commande ; le module de commutation SRIO est adapté pour transmettre les paquets de données à des adresses de destination selon la table de routage.

9. Système de station de base réparti selon l'une quelconque des revendications 4 à 8, dans lequel la relation topologique entre l'unité en bande de base et l'unité radio est parmi une structure en chaîne, une structure en arbre, une structure Mash, une structure en étoile ou une structure en anneau.

10. Système de station de base réparti basé sur un protocole Serial RapidIO « SRIO » comprenant une unité en bande de base et plusieurs unités radio, dans lequel :
l'unité en bande de base comprend un module de traitement en bande de base, un module principal de commande, un module de commutation SRIO en bande de base et un module de traitement d'interface en bande de base ; le module de traitement en bande de base est adapté pour le traitement en bande de base de signaux radio ; le module principal de commande est adapté pour gérer et commander l'unité en bande de base et sert d'HOTE du module de commutation SRIO en bande de base ; le module de traitement d'interface en bande de base est adapté pour convertir des données au niveau d'une interface entre l'unité en bande de base et un élément de réseau de niveau supérieur ; le module de traitement en bande de base, le module principal de commande et le module de traitement d'interface en bande de base sont tous connectés à des ports du module de commutation SRIO en bande de base, et adaptés pour mettre en oeuvre un échange d'informations par l'intermédiaire du module de commutation SRIO en bande de base en utilisant le protocole SRIO ;
l'unité radio est une seconde unité radio comprenant un module d'interface SRIO, un module de commutation SRIO radio, un module d'émetteur-récepteur et un module d'alimentation d'antenne ; le module d'interface SRIO est connecté au module de commutation SRIO radio et au module d'émetteur-récepteur adapté pour convertir des données entre le module d'émetteur-récepteur et le module de commutation SRIO radio ; le module de commutation SRIO radio est adapté pour convertir des données entre le module de commutation SRIO en bande de base et le module d'interface SRIO de l'unité radio ou d'autres unités radio ; le module d'alimentation d'antenne est connecté au module d'émetteur-récepteur et adapté pour émettre et recevoir des signaux radio de l'émetteur-récepteur ; le module d'émetteur-récepteur est connecté au module d'interface SRIO et au module d'alimentation d'antenne et adapté pour la conversion entre des données en bande de base et des signaux radio ;
le module de commutation SRIO radio de la seconde unité radio est connecté au module de commutation SRIO en bande de base de l'unité en bande de base ou à des modules de commutation SRIO radio d'autres secondes unités radio de manière filaire afin de constituer un réseau de commutation SRIO du système de station de base réparti ; le module de traitement en bande de base, le module principal de commande, le module de traitement d'interface en bande de base à l'intérieur de l'unité en bande de base sont adaptés pour effectuer un échange d'informations avec le module d'interface SRIO de la seconde unité radio via un réseau de commutation SRIO en utilisant le protocole SRIO.
